(19) **Europäisches Patentamt**

**European Patent Office**

**Office européen des brevets**

(11) **EP 0 983 978 B1**

(12) **EUROPEAN PATENT SPECIFICATION**

(45) Date of publication and mention
of the grant of the patent:
**11.05.2005  Bulletin 2005/19**

(51) Int Cl.[7]: **C04B 28/14**, C04B 22/14,
C04B 16/02, C04B 18/24,
C04B 14/18, C04B 14/20,
C04B 16/08

(21) Application number: **98909819.9**

(22) Date of filing: **23.03.1998**

(86) International application number:
**PCT/JP1998/001244**

(87) International publication number:
**WO 1998/042632 (01.10.1998 Gazette 1998/39)**

(54) **WET TYPE SPRAY REFRACTORY COATING COMPOSITION**

FEUERFESTE NASS SPRITZBESCHICHTUNGSZUSAMMENSETZUNG

COMPOSITION REFRACTAIRE DE REVETEMENT PAR PULVERISATION AU MOUILLE

(84) Designated Contracting States:
**GB**

(30) Priority:  **24.03.1997  JP 6964997**

(43) Date of publication of application:
**08.03.2000  Bulletin 2000/10**

(73) Proprietor: **A & A Material Corporation**
**Yokohama-shi, Kanagawa-Ken 230-8511 (JP)**

(72) Inventors:
• **OSAWA, Mitsuharu**
**Niihari-gun,Ibaraki-ken 315-0131 (JP)**
• **OSAWA, Tsutomu**
**Tokyo 144-0056 (JP)**
• **ODA, Masaaki**
**Ishioka-shi,Ibaraki-ken 315-0033 (JP)**

(74) Representative: **Midgley, Jonathan Lee**
**Marks & Clerk**
**90 Long Acre**
**London WC2E 9RA (GB)**

(56) References cited:
| | |
|---|---|
| EP-A- 0 480 072 | DE-B- 1 205 880 |
| DE-C- 19 517 267 | JP-A- 4 006 136 |
| JP-A- 7 033 503 | US-A- 5 401 538 |

**Description**

INDUSTRIAL FIELD OF APPLICATION

The present invention relates to a wet spray-on fireproofing composition for use in steel-frame building structures, plants, etc., with superior fire resistance properties and application efficiency.

PRIOR ART

Conventional wet spray-on fireproofing compositions for use in steel-frame building structures, factories, etc., in which the raw materials are mixed with water and sprayed on as a slurry, require a thickness of 20 to 65 mm to attain prescribed fire resistance properties, and thus require that the slurry be quite viscous to attain this thickness in one or two applications, and further require high-pressure pumps to convey this viscous slurry and high-pressure piping capable of handling such pressure, and machinery installation costs are therefore expensive and as a result application costs are high.

Moreover, most conventional wet spray-on fireproofing compositions use rock wool, but inorganic fibers, including rock wool, have been implicated as hazardous to human health, and their use is expected to be severely restricted in future. Wet spray-on fireproofing compositions are therefore called for which do not require high-pressure pumps or high-pressure piping, which can be pumped at low pressure and yet have good application efficiency, reduced cost, and do not contain inorganic fibers such as rock wool.

PROBLEMS THE INVENTION AIMS TO SOLVE

In order to overcome these problems, the present inventors have proposed a method, in Japanese Patent Laid-Open No. 6-92708, in which a slurry component, which is made by mixing oxides and/or hydroxides of alkaline earth metals and cement materials with water, and an aqueous solution component of water soluble salts, which are reacted at room temperature with oxides and/or hydroxides of alkaline earth metals, are each conveyed by a separate pump and transport pipe, and are merged, mixed and sprayed on by means of compressed air. This method does not require high-pressure pumps or piping, and after the highly-fluid, low-viscosity slurry has been sprayed on, it immediately semi-hardens (becomes viscous) and loses its fluidity, enabling thick application, which in turn greatly improves handling efficiency and enables reductions in handling costs.

However, this method suffers from the problem that the drying shrinkage ratio of its fireproofing material is slightly greater than the conventional fireproofing material, and there is a heightened risk that the material will lift away from the steel work or that cracks will form in the material on drying, particularly if no inorganic fiber is added thereto. Moreover, when Portland cement is used as the main bonding material, the strength of the fireproofing material becomes excessive and stress due to drying shrinkage increases, further increasing the risk that the material will lift away from the steel work or that cracks will form in the material.

Generally, rustproofing coats are applied to construction steel work, but when fireproofing material is sprayed on over rustproofing coats, the coat is degraded by alkali, and chalking occurs, significantly reducing the adherence strength of the fireproofing material. Consequently, if a material with a high drying shrinkage ratio, excessive strength, and hard properties is used, as described above, it is necessary to apply a protective coat with comparatively superior resistance to alkali, such as a copolymer resin like ethylene-vinyl acetate, or styrene-acrylic or styrene-butadiene rubber, over the rustproofing coat before applying the fireproofing material.

As a countermeasure to the above, methods of softening and weakening the material, by reducing the ratio of cement bonding material added, to reduce the stress and deformation caused by drying shrinkage have been considered. However, in such methods, there is usually not enough bonding material, which instead results in reduced adherence to the surface of the steel work, and when no inorganic fiber, such as rock wool, is included, there is a large decrease in strength due to lack of bonding material and reinforcement; and if the fireproofing material is exposed to fire, etc., the fireproof layer is too weak to remain on the surface of the steel work and falls off.

Consequently, an object of the present invention is to provide a wet spray-on fireproofing composition with superior fire resistance properties, which does not contain inorganic fiber, which is highly fluid during pumping and has superior pumping efficiency, yet ceases to be fluid after being sprayed on, enabling thick application, and which has no risk of cracking or lifting away from the surface of steel work due to shrinking.

MEANS OF SOLVING THE PROBLEMS

The present inventors have considered the above problems and, as a result of diligent research, have achieved the present invention by discovering that the above problems can be solved and that superior fire resistance properties can be obtained in a wet spray-on fireproofing composition for spray-on application as set out in claim 1.

BRIEF DESCRIPTION OF THE DRAWINGS

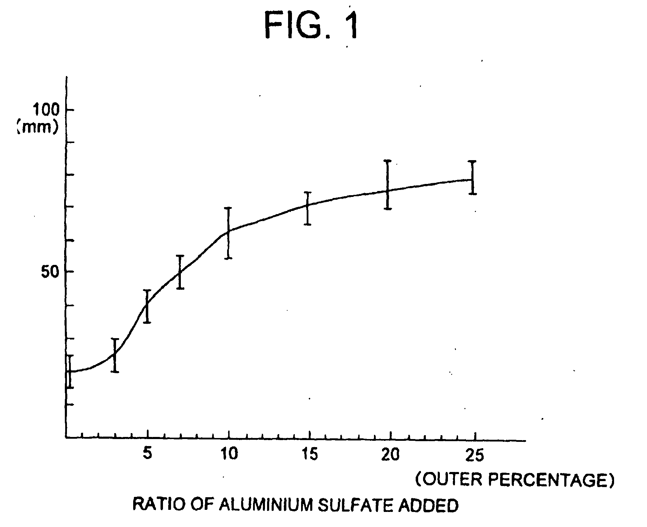

Fig. 1 is a graph showing the relationship between the ratio of aluminum sulfate added and the applicable thickness when the amount of aluminum sulfate added to the slurry mix of Inventive Product 4 was varied and spraying conducted on an 800 x 300 x 14 x 20 mm steel H-beam in the application experiment example.

DETAILED DESCRIPTION OF THE PREFERRED EMBODIMENTS

Here, the content of elements which enhance fire resistance properties after drying is represented by the formula:

$$W_3 \ (\%) = W_1 \ (\%) - W_2 \ (\%)$$

where:

$W_1$ (%) is the reduction in weight of a dried, hardened body (dried until a constant weight is reached in an environment of 50 percent relative humidity at 23°C) after heating for 3 hours at 1000°C ;
$W_2$ (%) is the ratio in percent by weight of flammable materials added to the total dry materials before mixing with water, and the flammable materials include: organic fibers; organic light-weight fillers, such as polystyrene foam, etc.; gypsum hardening retardants; viscosity improver; surfactants, etc. The aluminum sulfate which is merged and mixed in the nozzle is included in the total dry materials; and
$W_3$ (%) is the content of elements which enhance fire resistance properties after drying.

The elements which enhance fire resistance properties are derived from: water of crystallization contained in the hydrates of hydraulic materials and water of crystallization contained in ettringite ($3CaO.Al_2O_3.3CaSO_4.32H_2O$), which results from a reaction between calcium hydroxide (slaked lime) and/or calcium oxide (quick lime) and aluminum sulfate, which undergo dehydrating reactions around 50°C to 200°C and display endothermic effects; water of crystallization in metal hydroxides, such as aluminum hydroxide, magnesium hydroxide, etc., which undergoes a dehydrating reaction around 200°C to 500°C and displays endothermic effects; and carbon dioxide, which is generated when metal carbonates, etc., such as calcium carbonate, magnesium carbonate, etc., dissociate during endothermic reactions between 500°C and 800°C.

Calcium carbonate includes calcium carbonate formed by carbonation of calcium remaining in surplus from the slaked lime and/or quick lime components of the slurry after reaction with aluminum sulfate.

The wet spray-on fireproofing composition of the present invention comprises a slurry component, whose total solid content includes: (a) 20 to 90 percent by weight or more of gypsum; (b) 5 to 40 percent by weight of one or two species selected from a group comprising slaked lime and/or quick lime; and (c) 20 percent by weight or less of organic fibers and/or 30 percent by weight or less of light-weight fillers; mixed with water, the slurry component being fed to a spraying nozzle by means of a pump and conveying pipe, and an aqueous solution of aluminum sulfate, which is fed to the above spraying nozzle using a different pump and conveying pipe from that of the slurry component, wherein the slurry component and the aqueous solution of aluminum sulfate are merged, mixed and sprayed together with compressed air, and according to the present invention, the slurry component has extremely high fluidity and exceptionally superior conveyance efficiency while being pumped through the conveying pipe but within seconds of being merged and mixed with the aqueous solution of aluminum sulfate in the spraying nozzle and sprayed onto the surface of the steel work, ettringite is formed by reaction between the aluminum sulfate, the slaked lime and/or quick lime and water contained in the slurry component, whereby the viscosity of the slurry component rises dramatically and thick application becomes possible. Furthermore, better fire resistance properties can be obtained because the elements which enhance fire resistance properties are 20 percent by weight or more.

In the wet spray-on fireproofing composition of the present invention, the drying shrinkage is slightly large, but it is possible thereby to obtain a fireproof layer of enhanced flexibility in which visible shrinkage deformation is not likely to occur. Furthermore, even though it has such flexibility at room temperature, and in addition contains no inorganic fiber, such as rock wool, at all, the fireproof layer displays sufficient strength to maintain itself in position on the surface of the steel work even when exposed to high temperatures, such as those of a fire, etc. The precise reason for this phenomenon remains unclear, but it is believed that the flexibility is imparted by the form of, or the interplay between, the crystals formed by the reaction between three components: gypsum; slaked lime and/or quick lime; and aluminum sulfate, and some form of hardening is presumed to occur by a process involving dissociation of the crystals and phase transition due to heating thereof.

The compositional components of the wet spray-on fireproofing composition of the present invention will now be explained in further detail.

Gypsum:

The gypsum used in the slurry component does not have to be any special variety, and ordinary hemihydrate calcium sulfate ($CaSO_4.1/2H_2O$) can be used. The gypsum used may be obtained by crushing waste gypsum board, etc., and recalcining it. Examples of gypsum which can be used include:

- gypsum plaster: plaster for boards prescribed by JIS A6904 (calcined gypsum to which setting retardants, viscosity improver, etc., have been added);
- calcined gypsum: beta-$CaSO_4.1/2H_2O$ (dry calcined gypsum dihydrate ($CaSO_4.2H_2O$)); or
- alpha-hemihydrate gypsum: alpha-$CaSO_4.1/2H_2O$ (gypsum dihydrate ($CaSO_4.2H_2O$) wet heated in water)

Hardening retardants are usually used with gypsum, and in the present invention protein or organic acid hardening retardants are also added to achieve a hardening time usually of about 2 to 12 hours in the presence of slaked or quick lime, which are both gypsum hardening accelerators. Moreover, the main objective of setting the hardening time is to prevent the slurry component from hardening in the piping, and the hardening time may therefore be set to correspond to the time the slurry component remains in the piping and does not have to be limited to the above times.

In the present invention, the gypsum hardens after spraying and is used to maintain the strength of the fireproof layer, and the proportion thereof is 20 to 90 percent by weight or more based on the total solid content of the slurry component. When the proportion of gypsum is less than 20 percent by weight, superior strength after heating, which is a characteristic of the present invention, cannot be obtained, even if the strength at room temperature is maintained by adding other bonding materials, such as Portland cement, etc.

When the proportion of gypsum added is 20 percent by weight or more based on the total solid content of the slurry component, the strength at room temperature can also be suitably improved by the addition of one, or a mixture of two or more, selected from a group consisting of Portland cement, alumina cement, and blast furnace granurated slag, and the strength after heating will also be maintained. However, excessive addition thereof is undesirable because it causes a loss of flexibility in the hardened body, and the upper limit should therefore be 50 percent by weight based on the total solid content of the slurry component.

Slaked Lime and Quick Lime:

Slaked lime and/or quick lime are used because they react in an extremely short time with the aluminum sulfate which merges and mixes therewith in the spraying nozzle during spraying, and the reaction products thereof increase the viscosity of the slurry immediately after being sprayed on. Here, the industrial slaked lime prescribed by JIS R9001, or the plasterer's slaked lime prescribed by JIS A6902, etc., can be used as the slaked lime, and the industrial quick lime prescribed by JIS R9001 may be used as the quick lime, and it is preferable that these be ground to a powder sifted to 590 µm, but is not necessarily limited thereto.

It is essential that the proportion of slaked lime and/or quick lime be in the range of 5 to 40 percent by weight based on the total solid content of the slurry component. When the proportion is less than 5 percent by weight, it is not desirable, since the degree of increase in the viscosity of the slurry component due to reaction with aluminum sulfate will be too low. Also, when the proportion is more than 40 percent by weight, it is not desirable, since a decrease in strength and an increase in the drying shrinkage ratio will result. Further, when determining the mixing ratio for the slaked lime and/or quick lime, it is necessary to consider the ratio of aluminum sulfate added, as described below, and it is desirable that they be kept greater than the stoichiometric value for aluminum sulfate. This is because aluminum sulfate is strongly acidic and is corrosive to the steel work, and it is therefore necessary to completely neutralize it.

Aluminum Hydroxide and Magnesium Hydroxide:

In the present invention, the addition of metal hydroxides, such as aluminum hydroxide, magnesium hydroxide, etc., is also effective in increasing the fire resistance properties. Aluminum hydroxide is mined as a natural ore and can also be manufactured from bauxite by the Bayer method, and either of these can be used, but it is particularly preferable that there be a high water of crystallization content indicated by the chemical formula $Al(OH)_3$, such as that

of gibbsite. The particle size is acceptable if the maximum particle diameter is 1 mm or less, and preferably 0.3 mm or less.

Also, calcium carbonate and magnesium carbonate obtained from a natural mineral ore or industrially synthesized can be used in the present invention. The particle size is acceptable if the maximum particle diameter is 1 mm or less, and preferably 0.3 mm or less.

Moreover, if aluminum hydroxide, magnesium hydroxide, calcium carbonate, magnesium carbonate, etc., are added, the amount added should be 5 to 50 percent by weight, and sufficient effects will be apparent at 5 percent by weight or more, but when the amount added is more than 50 percent by weight, it is not preferable, since the strength of the hardened body will decrease, particularly after heating.

In the present invention, it is necessary to add at least one of either organic fibers or light-weight fillers. Adding either of these imparts suitable viscosity to the slurry component and is effective in preventing blockages and precipitation of solids inside the piping and is also effective in preventing the slurry component from splattering during application.

Also, adding either of these is effective in lowering the specific gravity of the applied hardened body, is advantageous from the viewpoints of cost and fire resistance properties, and in addition is effective in preventing cracking or lifting away from the surface of the steel work, because shrinkage stress during drying is reduced by an increase in overall flexibility. However, the addition of these inorganic fibers or light-weight fillers is not necessarily limited to only one thereof, and there is no problem with using both simultaneously.

Organic Fibers:

Various organic fibers, such as rayon, vinylon, acrylic, polyethylene, polypropylene, cellulose pulp, etc., can be used as the organic fibers in the present invention, but paper or cellulose pulp which has been dry pulverized and made into fiber form or flock form is ideal. Also, it is not necessary for the paper or cellulose pulp to be new, and used paper, such as old newspaper, etc., or recycled cellulose pulp made from the same, or remnants of cloth or old clothing of cotton, hemp, etc., may be used. The merits of using old paper and recycled cellulose pulp are great from the viewpoint of cost and the reuse of resources. It is preferable that the amount of organic fiber added be 20 percent by weight or less of the total solid content of the slurry component. When the amount added exceed 20 percent by weight, it is not desirable, since water retention decreases and there is a risk that the slurry will clog in the piping.

Light-Weight Fillers:

Inorganic light-weight fillers, such as vermiculite, perlite, Shirasu balloons, alumina balloons, etc., or organic light-weight fillers, such as polystyrene foam particles, etc., can be added as the light-weight fillers in the present invention. When using inorganic light-weight fillers, the amount added is 30 percent by weight or less based on the total solid content of the slurry component. Addition above 30 percent by weight is possible, but excessive addition may reduce the specific gravity too much, and may have adverse effects on the strength after heating. The addition of polystyrene foam particles is particularly effective from the viewpoint of reducing specific gravity, and these can be mixed in at 10 percent by weight or less, preferably between 0.2 and 10 percent by weight, a range which will not adversely affect the fire resistance properties.

Furthermore, the use of organic fibers and light-weight fillers together is effective from the viewpoint of improving the surface smoothness of the sprayed-on refractory, and a combination of perlite and polystyrene foam particles as the light-weight fillers is particularly effective. From the viewpoint of improving smoothness, the preferred ratio of organic fibers and light-weight fillers added is 5 to 10 percent by weight of organic fibers, 5 to 10 percent by weight of perlite, and 0.2 to 1.0 percent by weight of polystyrene foam particles, based on the total solid content of the slurry component.

Aluminum Sulfate:

Aluminum sulfate is merged and mixed with the slurry component in the spraying nozzle and the vicinity thereof as an aqueous solution. The aluminum sulfate reacts with the slaked lime and/or quick lime in the slurry component immediately after being merged and mixed, and raises the viscosity of the slurry component within seconds of being sprayed on. It also promotes the hardening of the gypsum, whose hardening time has been regulated by mixing in a hardening retardant, and causes the latter to harden within 30 minutes to one hour.

That is, according to the wet spray-on fireproofing composition of the present invention, a low-viscosity slurry, which has superior conveyability, is merged and mixed with the aqueous solution of aluminum sulfate as it is sprayed on, and its viscosity is immediately raised, so that even if applied thickly, it will not flow or fall off, and in addition, the hardening of the gypsum will be completed within the usual 30 minutes to one hour. Even when application must unavoidably be performed two or more times, the above characteristics allow the second and subsequent layers to be completed on the same day, and efficiency is therefore improved and application management facilitated. Another advantage is that the applied material does not remain in an unhardened condition for long, and the risk of it falling off due to vibrations, etc., is therefore significantly reduced.

There is no particular limitation on the aluminum sulfate used, and aluminum sulfate for industrial use, for paper making, or for water treatment, as prescribed by JIS A1423 or JIS A1450, can be used. Generally, aluminum sulfate is available in the forms of a hydrate, an anhydride, or as an aqueous solution, and any of these forms can be used.

The ideal concentration of the aqueous solution of aluminum sulfate used in the present invention is 35 percent by weight or more as $Al_2(SO_4)_3.18H_2O$, and the higher the concentration the better. When the concentration of the aqueous solution of aluminum sulfate is less than 35 percent by weight, it is not desirable, since the amount of solution which must then be merged and mixed in order to add the prescribed amount of aluminum sulfate becomes excessive and reduces the concentration of solids in the slurry, so that suitable viscosity of the slurry after being sprayed on cannot be obtained and the occurrence of splattering during application is increased. The upper limit to the concentration of the aqueous solution of aluminum sulfate is the saturation point of the aluminum sulfate, that is, about 50 percent by weight when converting $Al_2(SO_4)_3.18H_2O$, but there is no problem if the aqueous solution of aluminum sulfate is in a supersaturated state including solid aluminum sulfate provided that it is within a range which does not adversely affect conveyance by the pump.

It is preferable that the amount of aluminum sulfate mixed in be in the range of 5 to 30 percent by weight (converted from $Al_2(SO_4)_3.18H_2O$) as an outer percentage of the total solid content of the slurry component. When the amount mixed in is less than 5 percent by weight, it is not desirable, since the viscosity of the slurry will not be raised sufficiently and the content of elements which enhance fire resistance properties will also fail to reach 20 percent by weight or more, and when the amount mixed in is more than 30 percent by weight, it is not desirable, since the properties of the hardened body such as the drying shrinkage ratio, strength, etc., will be poor.

In the present invention, other well-known additives can be added besides the above components, for example, viscosity improver such as methyl cellulose, polyethylene oxide, sodium polyphosphate, sodium alginate, etc., water retainers, or surfactants such as dodecylbenzene sulfonate, alkylsulfate ester salts, alpha-olefin sulfonate, etc. The amount mixed in should be about 0.1 to 2.0 percent by weight as an outer percentage of the total solid content of the slurry component.

EFFECTS OF THE INVENTION

The present invention enables the provision of a wet spray-on fireproofing composition which has superior fire resistance properties, which is highly fluid during pumping and has superior pomping efficiency, yet ceases to be fluid after being sprayed on, enabling thick application, and which has no risk of cracking or lifting away from the surface of a steel work due to shrinking despite containing no mineral fibers.

EXAMPLES

The invention will now be explained in further detail by means of an embodiment.

Examples

Firstly, the materials shown in Table 1 were mixed dry, then the resulting dry mixture was agitated in a mortar mixer for approximately two minutes while adding water to the ratio prescribed in Table 1 to make slurries (0.2 percent by weight of methyl cellulose and 0.2 percent by weight of surfactants, by outer percentage respectively, were added to each of the slurries), and each of the slurries was conveyed by pumping in a rubber pressure hose of 35 mm diameter over a length of 100 m by a piston pump, supplied to a spraying nozzle attached to the end of the rubber pressure hose, and at the same time, an aqueous solution of aluminum sulfate (concentration 50 percent by weight as $Al_2(SO_4)_3.18H_2O$) was conveyed through a rubber pressure hose of 12 mm diameter by a diaphragm pump, the flow being adjusted so that the ratio of $Al_2(SO_4)_3.18H_2O$ added with respect to the solid content of the slurry was that shown in Table 1, was injected into an inlet disposed 150 mm from the orifis of the spraying nozzle, was merged and mixed with the slurry, and sprayed together with pressurized air onto 5 m lengths of 800 x 300 x 14 x 20 mm steel H-beam, and the pumping pressure and applicable thickness of each slurry was measured.

Next, separate spray-on applications of 50 mm thickness were made (where application to 50 mm was not possible in one application, two or three applications were made) on 2.5 m lengths of 800 x 200 x 8 x 13 mm H-steel to which a rustproof coating (JIS K5621: general rustproofing paint) had been applied, these were left to room temperature, and after two weeks of curing and hardening, were dried for three weeks at 40°C ± 5°C (until the water content was 2 percent or less), and the presence or absence of cracking or lifting away of the applied material from the surface of the steel work was observed. In addition, these were placed in a furnace and a fire resistance property test performed in accordance with JIS A1304 (method of testing refractories for building construction parts), and the fire resistance time, the presence or absence of falling off of the applied material during heating, and the compressive strength after heating were measured. The above measurements were conducted based on the test methods shown in Table 4. The materials used in the mixtures in the inventive products and comparative products are given in Table 3.

Table 1  Examples (Inventive Products)

| Slurry mix (%wt) | 1 | 2 | 3 | 4 | 5 | 6 | 7 | 8 | 9 | 10 | 11 | 12 |
|---|---|---|---|---|---|---|---|---|---|---|---|---|
| Gypsum | 82 | 60 | 75 | 62 | 65 | 70 | 50 | 40 | 37 | 40 | 30 | 56 |
| Slaked lime | 10 | 20 | 20 | 30 | 20 | 25 | 20 | 20 | 15 | 12 | 20 | 18 |
| Ordinary Portland cement | | | | | | | | | | 40 | | |
| Blast furnace granurated slag | | | | | | | | | | | 35 | |
| Organic fibers | 8 | | | 8 | 15 | 5 | | ·8 | 8 | 8 | 5 | 8 |
| Polystyrene foam particles | | | 5 | | | | | 2 | | | | 0.5 |
| Perlite | | 20 | | | | | 20 | | | | 10 | 5 |
| Aluminum hydroxide | | | | | | | 10 | 30 | 40 | | | 12.5 |
| Water mixing ratio (weight compared to solid content) | 1.5 | 1.5 | 1.1 | 1.5 | 1.9 | 1.2 | 1.5 | 1.6 | 1.6 | 1.5 | 1.5 | 1.5 |
| Aluminum sulfate (outer percentage; %) | 7 | 15 | 15 | 25 | 20 | 20 | 15 | 15 | 10 | 15 | 15 | 15 |
| Slurry pumping pressure (kg/cm$^2$) | 10 | 12 | 11 | 10 | 8 | 9 | 10 | 11 | 10 | 9 | 11 | 10 |
| Applicable thickness (mm) | 50 | 65 | 65 | 80 | 70 | 70 | 65 | 65 | 55 | 70 | 75 | 75 |
| Bulk density of hardened body (g/cc) | 0.45 | 0.44 | 0.46 | 0.42 | 0.40 | 0.52 | 0.43 | 0.42 | 0.45 | 0.45 | 0.46 | 0.43 |
| Drying shrinkage ratio (%) | 0.61 | 0.51 | 0.56 | 0.69 | 0.66 | 0.68 | 0.60 | 0.59 | 0.56 | 0.67 | 0.68 | 0.60 |
| Lifted away from surface of steel work | No | No | No | No | No | No | No | No | No | No | No | No |
| Cracks formed | No | No | No | No | No | No | No | No | No | No | No | No |
| Compressive strength after heating (kg/cm$^2$) | 1.2 | 0.9 | 1.1 | 0.7 | 0.6 | 1.0 | 0.9 | 0.7 | 0.5 | 1.0 | 1.0 | 1.1 |
| Fell off during heating | No | No | No | No | No | No | No | No | No | No | No | No |
| Content of refractory-enhancing elements (%) | 22.0 | 25.0 | 26.6 | 29.3 | 24.0 | 28.5 | 26.2 | 29.1 | 29.0 | 24.2 | 23.9 | 26.0 |
| Fire resistance time (minutes) | 180 | 191 | 187 | 193 | 182 | 193 | 194 | 192 | 196 | 185 | 187 | 189 |

EP 0 983 978 B1

Table 2

| (Comparative Products) | | | | | |
|---|---|---|---|---|---|
| Slurry mix (%wt) | 1 | 2 | 3 | 4 | 5 |
| Ordinary Portland cement | 72 | 25 | | | |
| Gypsum | | | 42 | 92 | 92 |
| Slaked lime | 20 | 20 | 50 | | |
| Organic fibers | 8 | 8 | 8 | 6 | 6 |
| Silica | | 47 | | | |
| Perlite | | | | | |
| Polystyrene foam particles | | | | 2 | 2 |
| Water mixing ratio | 1.5 | 1.5 | 1.5 | 1.5 | 1.1 |
| (weight compared to solid content) | | - | | | |
| Aluminum sulfate (outer percentage; %) | 15 | 15 | 15 | | |
| Slurry pumping pressure (kg/cm$^2$) | 11 | 10 | 9 | 11 | 60 |
| Applicable thickness (mm) | 65 | 55 | 65 | 15 | 50 |
| Bulk density of hardened body (g/cc) | 0.49 | 0.46 | 0.44 | 0.48 | 0.55 |
| Drying shrinkage ratio (%) | 0.6 | 0.5 | 1.0 | 0.1 | 0.1 |
| Lifted away from surface of steel work | Yes | No | Yes | No | No |
| Cracks formed | Yes | No | Yes | No | No |
| Compressive strength after heating (kg/cm$^2$) | | 0.1 | | 0.5 | 0.7 |
| Fell off during heating | | Yes | | No | No |
| Content of refractory-enhancing elements (%) | | | | 18.0 | 18.2 |
| Fire resistance time (minutes) | | | | 170 | 173 |

Table 3

| Material | Details |
|---|---|
| Gypsum | JIS A6904 plaster for boards |
| Ordinary Portland cement | JIS R5210 |
| Blast furnace granurated slag | "HAIMENTO" (Hitachi Cement KK) |
| Slaked lime | "Special Lime" (CHICHIBU SEKKAI KK) |
| Organic fibers | "JETTOFAIBAA" (JUUJOO MOKUZAI KK) (dry used paper cellulose pulp) |
| Polystyrene foam particles | particle size 2.2 mm or less; bulk specific gravity 0.02 (compacted polystyrene foam waste cellulose pulp) |
| Perlite | expanded perlite particle size 0.5 - 2 mm; bulk specific gravity 0.1 |
| Aluminum hydroxide | B-53 (NIPPON KEIKINZOKU KK) average particle size 50 $\mu$m |
| Silica | sifted through 250 mesh |

Table 4

Item and Method:

Slurry pumping pressure

The maximum value of the changes in pressure caused by the reciprocating piston is read by a pressure gauge attached immediately after the discharge outlet on the pressure pump.

Applicable thickness

The thickness (mm) of a single application is measured immediately prior to observing dripping or falling off.

Bulk density

After drying at 40°C until constant weight is reached, the outside dimensions are measured by vernier calipers, and the volume calculated, then the weight is measured, and the following calculation is made:

$$\text{specific density of hardened body (g/cc)} = \text{weight (g)/volume (cc)}$$

Drying shrinkage ratio

The length of a 40 x 40 x 160 mm test sample is measured before and after drying in accordance with the JIS A5430 test method for the change in length in a fiber cement board due to water absorption, and the following calculation is made:

$$\text{drying shrinkage ratio (\%)} = (L_1 - L_2)/L_1$$

where $L_1$ is the length before drying, and
$L_2$ is the length after drying.

Compressive strength after heating

The maximum load (P) is measured by means of a load gauge attached to a 30 x 30 x 2.3 mm iron plate which is placed on the upper surface of a beam test sample after heating, and to which a pressure load is applied manually at a load acceleration of 2 - 3 kg/cm$^2$ until the test sample breaks, and the following calculation is made:

$$\text{compressive strength after heating (kg/cm}^2\text{)} = \text{maximum load (P)/9}$$

Fire resistance time

The time (minutes) is measured from commencement of heating until the average temperature at six points on a steel H-beam test sample (with fireproofing composition applied) reaches 350°C, when the test sample is heated in accordance with the JIS A1304 standard heating curve and the temperature of the steel work is measured by six chromel-alumel (JIS C 1602 K) thermocouples, buried at both ends of the lower flange of 3 crosssetions taken along the center of the beam and at points 50 cm to either side of the center.

As a result, it can be seen from Table 1 that Inventive Products 1 to 12 are slurries with high fluidity which can be conveyed at low pressure, yet by merging and mixing aluminum sulfate with them, they can be applied to a thickness of 50 mm or more, and they are therefore vastly superior from the viewpoint of application.

Also, although the drying shrinkage ratio of each is slightly larger than usual, the hardened bodies are more flexible, so that no cracking or lifting away from the surface of the steel work was observed after drying, even under the worst adherence conditions where a rustproof coating had previously been applied to the surface of the steel work.

Moreover, the fireproof layer retained sufficient strength to hold itself even after heating, and the fireproof layer was not observed to fall off during or after heating.

On the other hand, the hardened bodies of samples such as Comparative Product 1, which used only ordinary Portland cement as a binder, lacked sufficient flexibility, and exhibited cracking and lifting away from the surface of the steel work, even though they had the same level of drying shrinkage ratio as the Inventive Products.

When the strength of the sample was reduced by reducing the amount of ordinary Portland cement, as in Comparative Product 2, the tendencies of Comparative Product 1 were alleviated but there was a significant decrease in strength after heating, and the fireproof layer fell off during heating.

Slurries such as Comparative Product 4, in which gypsum, light-weight fillers and organic fibers were merely applied by conventional methods, contained less than 20 percent by weight of elements which enhance fire resistance properties and therefore had inferior fire resistance times and fire resistance properties compared to the inventive products, and where, by conventional methods, the fluidity of the slurry had to be reduced by reducing the amount of water mixed in to enable application approaching 50 mm, as in Comparative Product 5, the pumping pressure rose significantly.

As a separate application experiment example, the amount of aluminum sulfate added to the slurry mix of Inventive Product 4 in Table 1 was varied and spraying conducted on 800 x 300 x 14 x 20 mm steel H-beams, the resulting applicable thickness was measured and the relationship between the amount of aluminum sulfate added and the applicable thickness was as shown in Fig. 1, and it is clear that the applicable thickness increases significantly when the amount of aluminum sulfate added is 5 percent by weight or more as an outer percentage of the total solid content of the slurry.

## Claims

1. A wet spray-on fireproofing composition for spray-on application after merging and mixing a slurry component and an aluminium sulphate aqueous solution component in a spraying nozzle **characterized in that** the total solid content of said slurry component includes as essential compositional components:

    (a) 20 to 90 percent by weight or more of gypsum;
    (b) 5 to 40 percent by weight of slaked lime and/or quick lime; and
    (c) 20 percent by weight or less of organic fibres and/or 30 percent by weight or less of light-weight fillers;

    which are mixed with water;
    and wherein the content of elements ($W_3$) which enhance fire resistance properties in a dried, hardened body after drying is 20 percent by weight or more:
    where:

$$W_3\ (\%) = W_1\ (\%) - W_2\ (\%);$$

    and
    $W_1$ (%) is the reduction in weight of a dried, hardened body after heating for 3 hours at 1000° C; and
    $W_2$ (%) is the percent by weight of flammable materials added to the total dry materials before mixing with water.

2. A wet spray-on fireproofing composition according to Claim 1, wherein said organic fibres comprise one species or two or more species selected from a group comprising fibres or flock obtained from used paper, used clothing, or remnants of cloth.

3. A wet spray-on fireproofing composition according to either of Claims 1 or 2, wherein the total solid content of said slurry component includes 5 to 50 percent by weight of one species or two or more species of additives which enhance fire resistance properties selected from a group comprising aluminium hydroxide, magnesium hydroxide, and magnesium carbonate.

4. A wet spray-on fireproofing composition according to any of Claims 1 to 3, wherein said slurry component contains one species or two or more species of binders selected from a group comprising Portland cement alumina cement, and blast furnace granulated slag.

5. A wet spray-on fireproofing composition according to any of Claims 1 to 4, wherein the amount of aluminium sulphate added is 5 to 30 percent by weight as an outer percentage of the total solid content of the slurry component by conversion from $Al_2(SO_4)_3 \cdot 18H_2O$.

6. A wet spray-on fireproofing composition according to any of Claims 1 to 5, wherein said light-weight fillers comprise one species or two or more species selected from a group comprising perlite, vermiculite, and polystyrene foam particles.

7. A wet spray-on fireproofing composition according to any of Claims 1 to 6, wherein the total solid content of the slurry component includes:

  5 to 10 percent by weight of one species or two or more species selected from a group comprising fibres or flock obtained from used paper, used clothing, or remnants of cloth as said organic fibres; and
  5 to 10 percent by weight of perlite and 0.2 to 1.0 percent by weight of polystyrene foam particles as said light-weight fillers.

**Patentansprüche**

1. Nassaufspritz-Flammschutzzusammensetzung für den Spritzauftrag nach dem Vermengen und Mischen einer Aufschlämmungskomponente und einer Komponente einer wässrigen Aluminiumsulfat-Lösung in einer Sprühdüse, **dadurch gekennzeichnet, dass** in den Gesamtfeststoffgehalt der Aufschlämmungskomponente als wesentliche Komponenten der Zusammensetzung einbezogen sind:

  (a) 20% oder 90 Gewichtsprozent oder mehr Gips;

  (b) 5% bis 40 Gewichtsprozent Löschkalk und/oder gebrannter Kalk und

  (c) 20 Gewichtsprozent oder weniger organische Fasern und/oder 30 Gewichtsprozent oder weniger Leichtfüllstoffe;

  die mit Wasser gemischt werden;
  und worin der Gehalt an wesentlichen Bestandteilen ($W_3$), die die Eigenschaften der Feuerfestigkeit in einem getrockneten, gehärteten Körper verbessern, nach dem Trocknen 20 Gewichtsprozent oder mehr beträgt, wobei

$$W_3(\%) = W_1(\%) - W_2(\%) \text{ gilt;}$$

  und
  $W_2(\%)$ die Gewichtsreduzierung eines getrockneten gehärteten Körpers nach 3-stündigem Erhitzen bei 1000°C ist; und
  $W_1(\%)$ der prozentuale Gewichtsanteil von entflammbaren Materialien ist, der den vollständig getrockneten Materialien vor dem Mischen mit Wasser zugesetzt wird.

2. Nassaufspritz-Flammschutzzusammensetzung nach Anspruch 1, worin die organischen Fasern ein Vertreter oder zwei oder mehr ausgewählte Vertreter aus einer Gruppe sind, die Fasern oder Kurzfasern umfaßt, die aus Altpapier, gebrauchter Kleidung oder Resten gebrauchter Kleidung erhalten werden.

3. Nassaufspritz-Flammschutzzusammensetzung nach Anspruch 1 oder 2, worin in den Gesamtfeststoffgehalt der Aufschlämmungskomponente 5% bis 50 Gewichtsprozent ein Vertreter oder zwei oder mehr Vertreter von Additiven sind, die die Eigenschaften der Feuerfestigkeit verbessern und ausgewählt sind aus der Gruppe, umfassend Aluminiumhydroxid, Magnesiumhydroxid und Magnesiumcarbonat.

4. Nassaufspritz-Flammschutzzusammensetzung nach einem der Ansprüche 1 bis 3, wobei die Aufschlämmungskomponente einen Vertreter oder zwei oder mehr Vertreter von Bindemitteln enthält, die ausgewählt sind aus der Gruppe, umfassend Portlandzement, Aluminiumoxid-Zement und granulierte Hochofenschlacke.

5. Nassaufspritz-Flammschutzzusammensetzung nach einem der Ansprüche 1 bis 4, wobei die Menge an zugesetztem Aluminiumsulfat 5% bis 30 Gewichtsprozent als äußerer Prozentanteil des Gesamtfeststoffgehaltes der Aufschlämmungskomponente durch Umwandlung von $Al_2(SO_4)_3 \cdot 18H_2O$ beträgt.

**6.** Nassaufspritz-Flammschutzzusammensetzung nach einem der Ansprüche 1 bis 5, wobei die Leichtfüllstoffe einen Vertreter oder zwei oder mehr ausgewählte Vertreter aus der Gruppe aufweisen, die Perlit umfasst, Vermiculit und Polystyrol-Schaumstoffpartikel.

**7.** Nassaufspritz-Flammschutzzusammensetzung nach einem der Ansprüche 1 bis 6, wobei in den Gesamtfeststoffgehalt der Aufschlämmungskomponente einbezogen sind:

5% bis 10 Gewichtsprozent ein Vertreter oder zwei oder mehr ausgewählte Vertreter aus der Gruppe, die Fasern oder Kurzfasem umfaßt, die als die organischen Fasern aus Altpapier, gebrauchter Kleidung oder Resten gebrauchter Kleidung erhalten werden und
5% bis 10 Gewichtsprozent Perlit und 0,2% bis 1,0 Gewichtsprozent Polystyrol-Schaumstoffpartikel als Leichtfüllstoffe.

**Revendications**

**1.** Composition ignifugeante à pulvérisation mouillée destinée à être appliquée par pulvérisation après association et mélange d'un composant en suspension et d'un composant en solution aqueuse de sulfate d'aluminium dans une buse de pulvérisation, **caractérisée en ce que** le contenu solide total dudit composant en suspension comprend comme composants essentiels formant la composition:

(a) 20 à 90 pour cent en poids ou davantage de gypse;
(b) 5 à 40 pour cent en poids de chaux éteinte et/ou de chaux vive; et
(c) 20 pour cent en poids ou moins de fibres organiques et/ou 30 pour cent en poids ou moins de charges de poids léger;

qui sont mélangés avec de l'eau;
et dans laquelle le contenu des éléments ($W_3$) qui améliorent les propriétés de résistance au feu dans un corps séché, durci après séchage est de 20 pour cent en poids ou davantage:
où:

$$W_3 \, (\%) = W_1 \, (\%) - W_2 \, (\%);$$

et
$W_1$ (%) est la réduction en poids d'un corps séché, durci après chauffage pendant 3 heures à 1000°C; et $W_2$ (%) est le pourcentage en poids de matériaux inflammables ajoutés au total des matériaux secs avant le mélange avec de l'eau.

**2.** Composition ignifugeante à pulvérisation mouillée selon la revendication 1, dans laquelle lesdites fibres organiques comprennent une espèce ou deux ou plusieurs espèces sélectionnées parmi le groupe comprenant les fibres ou floches obtenues à partir de papier usagé, de vêtements usagés, ou de restants de tissu.

**3.** Composition ignifugeante à pulvérisation mouillée selon l'une ou l'autre des revendications 1 ou 2, dans laquelle le contenu solide total dudit composant en suspension comprend 5 à 50 pour cent en poids d'une espèce ou de deux ou plusieurs espèces d'additifs qui améliorent les propriétés de résistance au feu sélectionnés parmi le groupe comprenant l'hydroxyde d'aluminium, l'hydroxyde de magnésium, et le carbonate de magnésium.

**4.** Composition ignifugeante à pulvérisation mouillée selon une quelconque des revendications 1 à 3, dans laquelle ledit composant en suspension contient une espèce ou deux ou plusieurs espèces de liants sélectionnés parmi le groupe comprenant le ciment de Portland, le ciment alumineux, et le laitier granulé de haut-fourneau.

**5.** Composition ignifugeante à pulvérisation mouillée selon une quelconque des revendications 1 à 4, dans laquelle la quantité de sulfate d'aluminium ajoutée est de 5 à 30 pour cent en poids exprimée en pourcentage externe du contenu solide total du composant en suspension par conversion à partir de $Al_2(SO_4)_3 \cdot 18H_2O$.

**6.** Composition ignifugeante à pulvérisation mouillée selon une quelconque des revendications 1 à 5, dans laquelle lesdites charges de poids léger comprennent une espèce ou deux ou plusieurs espèces sélectionnées parmi le groupe comprenant la perlite, la vermiculite, et les particules de mousse de polystyrène.

7. Composition ignifugeante à pulvérisation mouillée selon une quelconque des revendications 1 à 6, dans laquelle le contenu solide total du composant en suspension comprend:

5 à 10 pour cent en poids d'une espèce ou de deux ou plusieurs espèces sélectionnées parmi le groupe comprenant les fibres ou floches obtenues à partir de papier usagé, de vêtements usagés, ou de restants de tissu constituant lesdites fibres organiques; et
5 à 10 pour cent en poids de perlite et 0,2 à 1,0 pour cent en poids de particules de mousse de polystyrène constituant lesdites charges de poids léger.

## FIG. 1

EP 0 983 978 B1